# EUROPÄISCHE PATENTANMELDUNG

(11) **EP 3 643 169 A1**
(43) Veröffentlichungstag der Anmeldung: **29.04.2020**
(21) Anmeldenummer: 18000825.2
(22) Anmeldetag: 22.10.2018
(51) Int. Cl.: A01K 11/00

(54) **BEFESTIGUNG FÜR EIN ORTUNGSGERÄT AN EINEM HALSBAND**

(71) Anmelder: Swiss Tracking Solutions AG, 6052 Hergiswil (CH)
(72) Erfinder: Enami, Arman, 10117 Berlin (DE)
(74) Vertreter: Kietzmann, Manfred

(57) **Zusammenfassung**

Die Erfindung betrifft insbesondere eine Befestigung für ein Ortungsgerät (2) an einem Halsband (1), wobei das Ortungsgerät (2) ein Gehäuse (3) aufweist mit einem Boden (4), der mindestens zwei gegenüberliegende Kanten (5, 6) besitzt, wobei an diesen Kanten (5 und 6) jeweils eine Seitenwand (7, 8) des Gehäuses (3) angeordnet ist, und der Boden (4) nach der Befestigung des Ortungsgerätes (2) mittels mindestens einem Band, das das Halsband (1) hinterfasst, auf dem Halsband (1) aufliegt. Das mindestens eine Band ist ein elastisches ringförmiges und in seinem ringförmigen Umfang längsdehnbares Band (9) und die Seitenwände (7, 8) weisen im Bereich der Kanten (5, 6) des Bodens (4) rinnenförmige Aufnahmen (10, 11) für das gedehnte ringförmige Band (9) auf.

## Beschreibung

Die Erfindung betrifft die Befestigung eines Ortungsgerätes insbesondere an einem Tierhalsband und dabei insbesondere an einem Halsband für Hunde und Katzen.

Jährlich verschwinden zehntausende Hunde und Katzen, so dass es einen echten Bedarf gibt, die Hunde und Katzen zu orten, um den Aufenthalt des Tieres zu ermitteln, um ggf. helfend einzugreifen oder zumindest bei einem Unfall Gewissheit über das Schicksal des Tieres zu erlangen.

Derartige Ortungsgeräte, in der Regel auf GPS-Basis arbeitend, sind bekannt.

So wird in der DE 10 2009 015 544 A1 ein Verfahren zum Betrieb einer Vorrichtung zum Orten eines beweglichen Objektes beschrieben, bei dem die Ortungsmittel auf der Basis eines satellitengestützten Navigationssystems arbeiten, das über Kommunikationsmittel zur Übertragung von Positionsdaten über ein drahtloses Kommunikationsnetz verfügt, Steuerungsmittel zur Steuerung der Ortungsmittel und der Kommunikationsmittel, vorhanden sind und das Energieversorgungsmittel umfasst, wobei man in wenigstens einem Betriebsmodus die Ortungsmittel in Abhängigkeit von der Empfangsqualität der von den Ortungsmitteln empfangen Satellitensignale betreibt'.

Derartige Ortungsmittel sind über ein Halsband mit dem Tier verbunden oder in das Halsband integriert. Daraus ergeben sich mindestens drei Konsequenzen:
- Das Gewicht der Ortungsgeräte, insbesondere bei Katzen und kleineren Hunden muss möglichst gering gehalten werden.
- Der Energieverbrauch sollte optimiert sein, um auch bei längerer Abwesenheit noch eine Ortung zu ermöglichen.
- Die Gefahr einer Strangulierung des Tieres durch Hängenbleiben sollte minimiert sein.

Eine stromreduzierte Vorrichtung zum Orten von kleinen Tieren wird in der EP 2 585 851 B1 vorgeschlagen, in dem ein hochwirksames Energiemanagement vorgesehen wird.

Mit dem petpointer wurde ein GPS Tracking System entwickelt, das auf 14 cm² modernste Technik zur Ortung von Haustieren aufweist, wobei die Ortungsergebnisse über übliche Kommunikationsgeräte abrufbar sind (http://www.petpointer.ch/de/). Durch die Trennung der Kommunikationstechnik von der Batterie bei diesem Gerät kann letztere ohne Lösen des gesamten Gerätes vom Halsband aufgeladen werden.

Zur Befestigung des petpointer am Halsband dienen Kabelverbinder oder Aufnahmebügel am Gerät oder eine spezielle Kunststoffeinstecktasche.

Des Weiteren wird insbesondere bei Katzen ein spezielles Katzenhalsband genutzt, das über einen Sicherheitsverschluss für das Halsband verfügt, so dass die Gefahren einer Strangulierung oder des Einfädelns mit den Vorderbeinen beseitigt sind. Der Sicherheitsverschluss löst tiergewichtsabhängig aus.

Über eine App lassen sich die Wanderwege auf einem PC oder mobilen Kommunikationsgeräten verfolgen.

Aufgabe der Erfindung ist es, die Befestigung eines GPS-Tracking-Gerätes zu optimieren und für jedes Halsband geeignet zu machen.

Gelöst wird diese Aufgabe mit den Merkmalen des Anspruches 1. Vorteilhafte Ausgestaltungen sind Gegenstand der Unteransprüche.

Zur Befestigung für ein Ortungsgerät an einem Halsband, wobei das Ortungsgerät ein Gehäuse aufweist mit einem Boden, der mindestens zwei gegenüberliegende Kanten besitzt, wobei an diesen Kanten jeweils eine Seitenwand des Gehäuses angeordnet ist, und der Boden nach der Befestigung des Ortungsgerätes mittels mindestens einem Band, das das Halsband hinterfasst, auf dem Halsband aufliegt, wird erfindungsgemäß vorgeschlagen, dass das mindestens eine Band ein elastisches ringförmiges und in seinem Umfang längsdehnbares Band ist und die Seitenwände im Bereich der Kanten des Bodens rinnenförmige Aufnahmen für das gedehnte ringförmige Band aufweisen.

Bei einer vorteilhaften Ausführung weist eine Seitenwand eine rinnenförmige Aufnahme für das Band auf, deren schlitzförmige Öffnung weg vom Boden weist. Bevorzugt erstreckt sich diese Aufnahme über die gesamte Länge der Seitenwand.

Die andere Seitenwand weist bei einer bevorzugten Ausführung mindestens drei, vorteilhafter Weise fünf, parallel zum Boden und in Bodenlängsrichtung beabstandet zueinander angeordnete Aufnahmen auf, wobei die Richtung der schlitzförmigen Öffnung dieser nacheinander angeordneten rinnenförmigen Aufnahmen von Aufnahme zur nächsten Aufnahme wechselt, vorzugsweise um 180°.

Durch diesen Richtungswechsel der Öffnungen der Aufnahmen erfolgt eine Fixierung des Bandes. Es kann im Gegensatz zu der Aufnahme auf der anderen Seitenwand nicht in eine Richtung entnommen werden.

Weiter von Vorteil ist es, wenn die Aufnahmen, deren Öffnungen jeweils in eine Richtung weisen auf einer parallel zum Boden verlaufenden Längsachse liegen und zwischen der Längsachse der Aufnahmen, deren Öffnungen in eine Richtung weisen und der Längsachse der Aufnahmen, die in die andere Richtung weisen ein Abstand (a) besteht, so dass das Band die Aufnahmen nicht gradlinig durchläuft, sondern in Form einer Schlangenlinie. Die Fixierung des Bandes in den Aufnahmen wird so weiter erhöht.

Zur Verhinderung des eigenständigen Lösens des Bandes ist es von Vorteil, wenn mindestens einige schlitzartige Öffnungen der einzelnen Aufnahmen in der Schlitzbreite so begrenzt sind, dass nur der gedehnte Querschnitt des ringförmigen Bandes in die Aufnahme einbringbar ist. Auch die Schlitzbreite der anderen Aufnahmen kann so ausgebildet sein.

Eine weitere vorteilhafte Ausgestaltung sieht vor, dass die äußeren Enden der einen Aufnahme und die der außen liegenden Aufnahmen seitliche nasenartige Ausstülpungen aufweisen. Diese Ausstülpungen wirken als Führung für das dehnbare Band, wenn das Halsband eine größere Breite aufweist als das Gehäuse des Ortungsgerätes.

Bei einer bevorzugten Ausführung ist das ringförmige Band ein Gummiband. Das hat mehrere Vorteile. Zum einen ist es gut dehnbar, so dass es die Befestigungsfunktion bei Halsbändern beliebiger Breite erfüllt. Zum anderen ist die Festigkeit begrenzt, so dass bei einem Hängenbleiben des Tieres mit dem Ortungsgerät eine Strangulierung ausgeschlossen werden kann. Ein Gummiband ist auch schnell ersetzbar.

Bei einer vorteilhaften Ausbildung des Bandes ist vorgesehen, dass das ringförmige Band eine Lasche zum Anfassen aufweist. Diese sollte sich nach dem Einfädeln des Bandes in die drei oder fünf Aufnahmen auf der Seite mit der einen Aufnahme befinden, denn hier wird die Befestigung zum Abnehmen des Ortungsgerätes vom Halsband geöffnet, indem das Band aus der Aufnahme herausgezogen wird.

Wie eingangs dargelegt, gibt es geteilt ausgebildete Gehäuse für das Ortungsgerät. Bei einem geteilt ausgebildeten Gehäuse ist vorgesehen, dass ein Teilgehäuse über die vollständigen Seitenwände verfügt und das zweite Teilgehäuse zwischen diese Seitenwände einsteckbar oder einschiebbar und verriegelbar ist. Das Teilgehäuse mit den vollständigen Seitenwänden kann dann über die Aufnahmen für das Band verfügen und das andere Teilgehäuse, insbesondere für eine Batterie, kann entfernt werden zum Aufladen der Batterie, ohne dass das ganze Ortungsgerät abgenommen werden muss. Der Vorteil eines geteilten Gehäuses bleibt so erhalten.

Die Erfindung soll anhand der Zeichnungen erläutert werden. Es zeigen:
- Fig. 1: das Gehäuse des Ortungsgerätes und das ringförmige Band zur Befestigung des Gehäuses an einem Halsband,
- Fig. 2: das in die Aufnahmen auf einer Seite des Gehäuses eingesetzte Band,
- Fig. 3: die andere Seite des Gehäuses mit dem dort eingesetzten Band,
- Fig. 4: das Ortungsgerät auf einem breiten Halsband und
- Fig. 5: das Ortungsgerät auf einem schmalen Halsband.

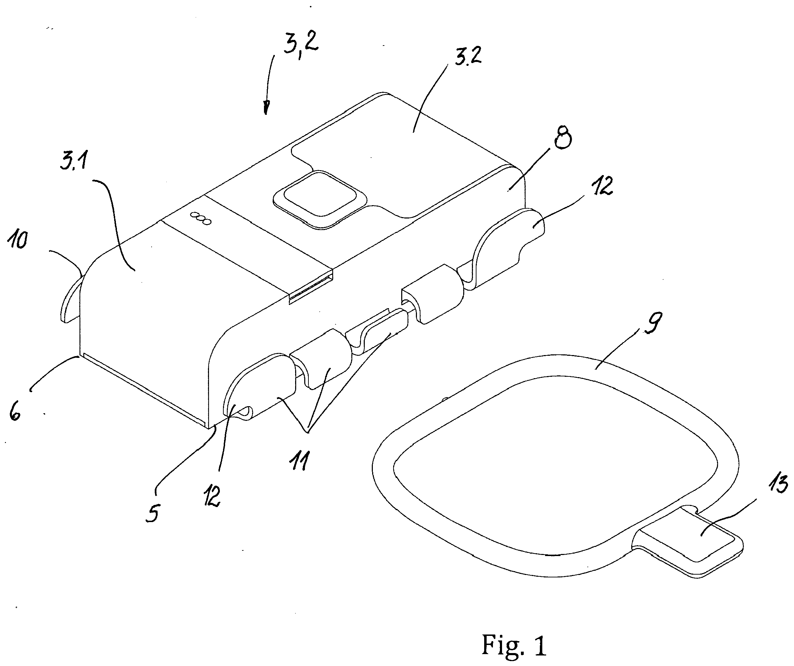

**Fig. 1** zeigt das Gehäuse 3 des Ortungsgerätes 2 und das ringförmige Band 9 zur Befestigung des Gehäuses an einem Halsband 1.

Das Gehäuse 3 weist einen Boden 4 auf, der mindestens zwei gegenüberliegende Kanten 5, 6 besitzt, wobei an diesen Kanten 5, 6 jeweils eine Seitenwand 7, 8 des Gehäuses 3 angeordnet ist. Der Boden 4 des Gehäuses 3 liegt nach der Befestigung des Ortungsgerätes 2 mittels des Bandes 9, das das Halsband 1 hinterfasst, auf dem Halsband 1 auf.

Bei einem geteilt ausgebildeten Gehäuse 3, wie in Fig. 1 dargestellt, verfügt ein Teilgehäuse 3.1 über die vollständigen Seitenwände 7, 8 und das zweite Teilgehäuse 3, 2 ist zwischen diese Seitenwände 7, 8 einsteckbar oder einschiebbar und verriegelbar.

Das ringförmige Band 9 ist ein elastisches, ringförmiges und in seinem ringförmigen Umfang längsdehnbares Band, vorzugsweise ein Gummiband, das zur Befestigung des Ortungsgerätes 2 in rinnenförmige Aufnahmen 10, 11 der gegenüberliegenden Seitenwände 7, 8 des Gehäuses 3 greift.

Die rinnenförmigen Aufnahmen 10, 11 der gegenüberliegenden Seitenwände 7, 8 sind bevorzugt im Bereich der Kanten 5, 6 des Bodens 4 angeordnet.

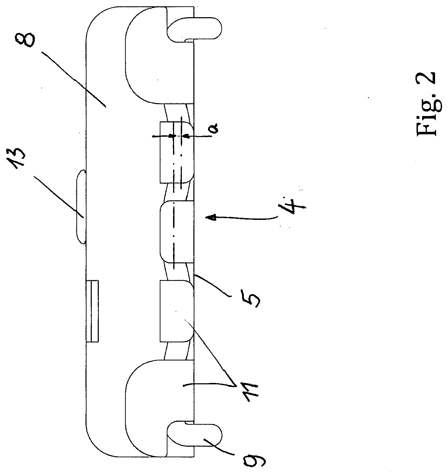

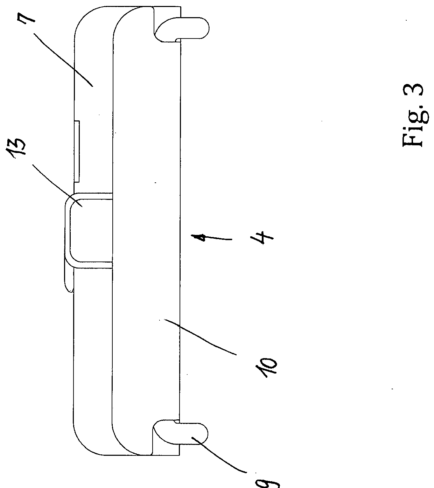

Dabei sind die rinnenförmigen Aufnahmen 10, 11 unterschiedlich ausgebildet, was in den **Fig. 2** und **Fig. 3** gezeigt wird.

Die Seitenwand 7 weist eine rinnenförmige Aufnahme 10 für das Band 9 auf, deren schlitzförmige Öffnung weg vom Boden 4 weist. Die Aufnahme 10 erstreckt sich bevorzugt über die ganze Länge der Seitenwand 7. Das Band 9 ist so über die Seitenlänge geschützt angeordnet.

Die Seitenwand 8 weist mindestens drei, hier fünf, parallel zum Boden 4 und in Bodenlängsrichtung zueinander beabstandet angeordnete Aufnahmen 11 auf, wobei die Richtung der schlitzförmigen Öffnung dieser nacheinander angeordneten rinnenförmigen Aufnahmen 11 von Aufnahme 11 zur nächsten Aufnahme 11 wechselt, vorzugsweise um 180°. Das Band 9 wird so einmal von oben und dann von unten usw. in die Aufnahmen 11 eingelegt. Es kann so nicht aus den Aufnahmen 11 herausfallen.

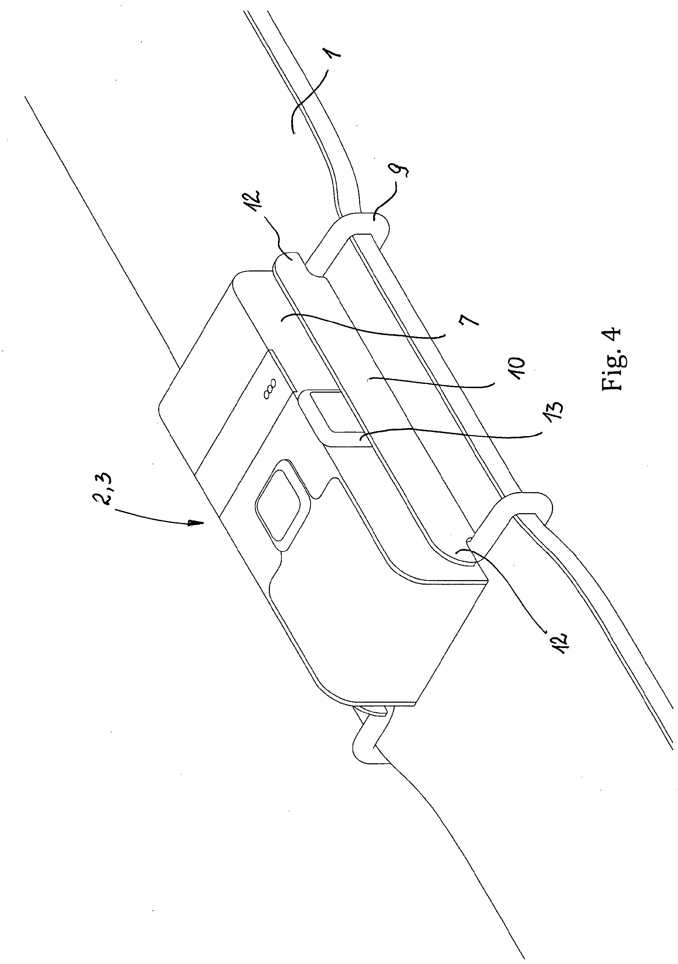

Um ein seitliches Verschieben ebenfalls zu unterdrücken, ist vorgesehen, dass die Aufnahmen 11, deren Öffnungen jeweils in eine Richtung weisen, auf einer parallel zum Boden 4 verlaufenden Längsachse liegen. Besteht zwischen der Längsachse der nach oben offenen Aufnahmen 11 und der Längsachse der nach unten offenen Aufnahmen 11 ein Abstand (a), bildet das Band 9 beim Durchlaufen aller Aufnahmen 11 eine Schlangenlinie. Dadurch wird das seitliche Verschieben des Bandes 9 unterbunden.
Weiter wird gezeigt, dass die äußeren Enden der Aufnahmen 10 und der außen liegenden Aufnahmen 11 seitlich nasenartige Ausstülpungen 12 aufweisen. Diese dienen als Führung des Bandes 9, wenn das Halsband 1 breiter ist als das Gehäuse 3, Dies zeigt **Fig. 4** anschaulich.

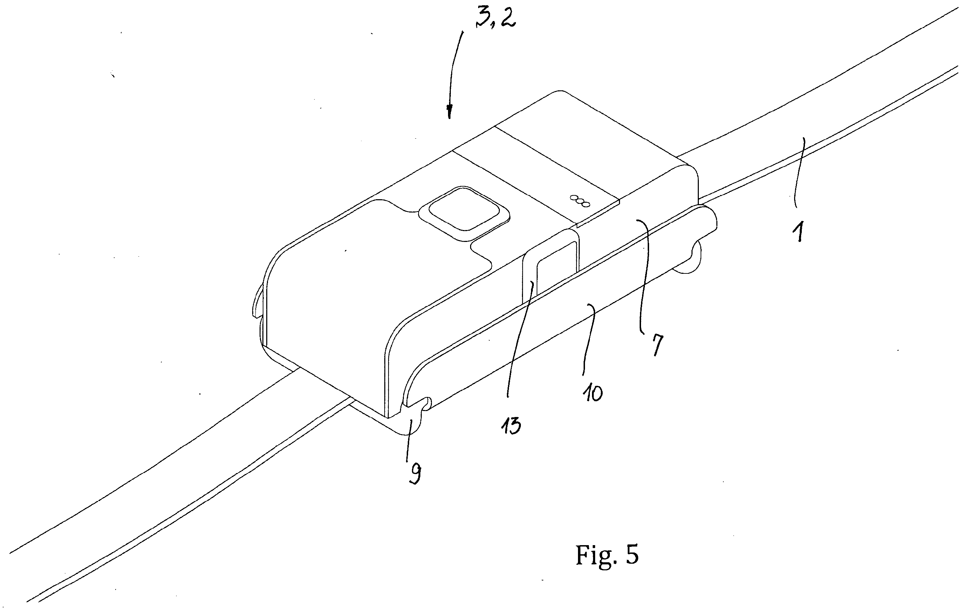

In **Fig. 5** ist das Ortungsgerät 2 breiter als das Halsband 1. Um das Band 9 in die Aufnahme 10 einzubringen oder herauszunehmen, weist das Band 9 vorzugsweise eine Lasche 13 auf. Diese Lasche 13 überragt die rinnenförmige Aufnahme 10, wenn sich das Band 9 in der Aufnahme 10 befindet und ist so gut mit den Fingern greifbar. Das Ortungsgerät 2 ist so für einen Menschen leicht vom Halsband 1 zu lösen.

Die Befestigung eines Ortungsgerätes an einem Halsband wurde vorab beispielhaft beschrieben. Ebenso ist es möglich, das Ortungsgerät an einem Armband zu befestigen oder an einem anderen Band oder auch an einer Leiste. Auf diese Weise lassen sich unterschiedlichste Anwendungen realisieren.

### Bezugszeichenliste

- 1: Halsband
- 2: Ortungsgerät
- 3: Gehäuse
- 3.1: Teilgehäuse
- 3.2: Teilgehäuse
- 4: Boden des Gehäuses
- 5: Kante des Bodens
- 6: Kante des Bodens
- 7: Seitenwand des Gehäuses
- 8: Seitenwand des Gehäuses
- 9: ringförmiges Band
- 10: rinnenförmige Aufnahme
- 11: rinnenförmige Aufnahme
- 12: Ausstülpungen
- 13: Lasche

## Patentansprüche

1. Befestigung für ein Ortungsgerät (2) an einem Halsband (1), wobei das Ortungsgerät (2) ein Gehäuse (3) aufweist mit einem Boden (4), der mindestens zwei gegenüberliegende Kanten (5, 6) besitzt, wobei an diesen Kanten (5 und 6) jeweils eine Seitenwand (7, 8) des Gehäuses (3) angeordnet ist, und der Boden (4) nach der Befestigung des Ortungsgerätes (2) mittels mindestens einem Band, das das Halsband (1) hinterfasst, auf dem Halsband (1) aufliegt, **dadurch gekennzeichnet, dass**
das mindestens eine Band ein elastisches ringförmiges und in seinem ringförmigen Umfang längsdehnbares Band (9) ist und die Seitenwände (7, 8) im Bereich der Kanten (5, 6) des Bodens (4) rinnenförmige Aufnahmen (10, 11) für das gedehnte ringförmige Band (9) aufweisen.

2. Befestigung nach Anspruch 1, **dadurch gekennzeichnet, dass**
die Seitenwand (7) eine rinnenförmige Aufnahme (10) für das Band (9) aufweist, deren schlitzförmige Öffnung weg vom Boden weist.

3. Befestigung nach Anspruch 1 oder 2, **dadurch gekennzeichnet, dass**
die Seitenwand (8) mindestens drei parallel zum Boden (4) und in Bodenlängsrichtung zueinander beabstandet angeordnete Aufnahmen (11) aufweist, wobei die Richtung der schlitzförmigen Öffnung dieser nacheinander angeordneten rinnenförmigen Aufnahmen (11) von Aufnahme (11) zur nächsten Aufnahme (11) wechselt, vorzugsweise um 180°.

4. Befestigung nach Anspruch 3, **dadurch gekennzeichnet, dass**
die Aufnahmen (11), deren Öffnungen jeweils in eine Richtung weisen, eine parallel zum Boden (4) verlaufende Längsachse besitzen.

5. Befestigung nach Anspruch 4, **dadurch gekennzeichnet, dass**
zwischen der Längsachse der Aufnahmen (11), deren Öffnung in eine Richtung weisen und der Längsachse der Aufnahmen (11), die in die andere Richtung weisen ein Abstand (a) besteht, so dass das Band (9) beim Durchlaufen aller Aufnahmen (11) eine Schlangenlinie bildet.

6. Befestigung nach einem der Ansprüche 1 bis 5, **dadurch gekennzeichnet, dass**
die äußeren Enden der Aufnahmen (10) und der außen liegenden Aufnahmen (11) seitlich nasenartige Ausstülpungen (12) aufweisen.

7. Befestigung nach einem der Ansprüche 1 bis 6, **dadurch gekennzeichnet, dass**
die schlitzartige Öffnung der Aufnahme (10) oder alle oder ein Teil der schlitzartigen Öffnungen der Aufnahmen (10, 11) in der Schlitzbreite so begrenzt sind, dass nur der gedehnte Querschnitt des ringförmigen Bandes (9) in die Aufnahmen (10, 11) einbringbar ist.

8. Befestigung nach einem der Ansprüche 1 bis 7, **dadurch gekennzeichnet, dass**
das ringförmige Band (9) ein Gummiband ist.

9. Befestigung nach einem der Ansprüche 1 bis 8, **dadurch gekennzeichnet, dass**
das ringförmige Band (9) eine Lasche (13) zum Anfassen aufweist.

10. Befestigung nach einem der Ansprüche 1 bis 9, **dadurch gekennzeichnet, dass**
bei einem geteilt ausgebildeten Gehäuse (3) ein Teilgehäuse (3.1) über die vollständigen Seitenwände (7, 8) verfügt und das zweite Teilgehäuse (3.2) zwischen diese Seitenwände (7, 8) einsteckbar oder einschiebbar und verriegelbar ist.
